# EUROPÄISCHE PATENTSCHRIFT

(11) **EP 1 632 331 B1**
(45) Veröffentlichungstag und Bekanntmachung des Hinweises auf die Patenterteilung: **26.03.2008**
(21) Anmeldenummer: 05012696.0
(22) Anmeldetag: 14.06.2005
(51) Int. Cl.: B29C 47/64, B29C 47/40

(54) **Extruderschnecke, Extruder sowie Welle-Nabe-Verbindung**
Extruder screw, extruder and shaft-hub connection
Vis d'extrudeuse, extrudeuse et liaison arbre-moyeu

(30) Priorität: 03.09.2004 DE 102004042746
(43) Veröffentlichungstag der Anmeldung: 08.03.2006
(73) Patentinhaber: Leistritz Aktiengesellschaft, 90459 Nürnberg (DE)
(72) Erfinder: Dietz, Peter Prof. Dr.-Ing., 38678 Clausthal-Zellerfeld (DE); Schäfer, Günter Dr.-Ing., 38640 Goslar (DE); Mupende, Ilaka Dr.-Ing., 38678 Clausthal-Zellerfeld (DE); Turan, Cem Dipl.-Ing., 38678 Clausthal-Zellerfeld (DE); Rduch, Günther, 91207 Lauf a.d. Pegnitz (DE); Walter, Wolfgang, 73434 Aalen (DE)
(74) Vertreter: Blaumeier, Jörg

(56) Entgegenhaltungen:
- EP-A- 0 637 696
- US-A- 5 593 227
- US-A- 5 716 159
- US-A- 6 116 771
- PATENT ABSTRACTS OF JAPAN Bd. 2003, Nr. 12, 5. Dezember 2003 (2003-12-05) & JP 2004 044660 A (JAPAN STEEL WORKS LTD:THE), 12. Februar 2004 (2004-02-12)

## Beschreibung

Die Erfindung betrifft eine Extruderschnecke bestehend aus einer Schneckenwelle mit mehreren auf dieser lösbar aufsteckbaren oder aufgesteckten Schneckenelementen, wobei die Schneckenwelle eine Außenverzahnung und die Schneckenelemente eine in diese eingreifende Innenverzahnung aufweisen, gemäß dem Oberbegriff des Patentanspruchs 1.

Derartige auch als Steckschnecken bezeichnete Extruderschnecken sind bekannt und ermöglichen einen variablen Aufbau einer Extruderschnecke, in dem je nach Anforderung unterschiedliche Schneckenelemente, seien es Förder-, Knet- oder Mischelemente, in verschiedene Reihung auf der Schneckenwelle angeordnet werden können. Um einerseits das Aufstecken, andererseits den im Betrieb erforderlichen Drehmomentübertrag von der Schneckenwelle, in die über den Extrudermotor das Drehmoment eingeleitet wird, auf die Schneckenelemente zu ermöglichen, ist eine Welle-Nabe-Verzahnung zwischen der Schneckenwelle und den Schneckenelementen vorgesehen, das heißt, die Schneckenwelle weist eine Außenverzahnung auf, während die als Nabe fungierenden Schneckenelemente an der Innenseite ihrer Bohrung eine Innenverzahnung aufweisen, wobei beide Verzahnungen miteinander kämmen.

Üblicherweise kommen bei Extruderschnecken Welle-Naben-Verbindungen gemäß den Normen DIN 5480, DIN 5464 oder ISO 4156 in Form einer Evolventenverzahnung zum Einsatz. Diese formschlüssige, symmetrische Verzahnung ermöglicht einen beachtlichen Drehmomentübertrag bei gleichzeitiger einfacher Montier- und Demontierbarkeit der Schneckenelemente.

Bei Extrudern besteht generell die Forderung nach möglichst hoher Leistungsfähigkeit, die sich primär im erzielbaren Durchsatz widerspiegelt. Dabei stellen im Rahmen der Maschinenauslegung das verfügbare Drehmoment, also das Drehmoment, das effektiv über die Schneckenwelle auf die Schneckenelemente übertragen werden kann, die Schneckendrehzahl und damit die Antriebsleistung sowie das zur Verfügung stehende freie Schneckenvolumen die entscheidenden Auslegungskriterien dar. Grundsätzlich ist ein hohes zur Verfügung stehendes Drehmoment von Vorteil, denn dies lässt zum einen ein höheren Füllgrad zu, weiterhin werden geringere mittlere Schergeschwindigkeiten und niedrigere Produkttemperaturen erreicht. Die Verweilzeit des Produkts im Extruder ist verkürzt, die Produktbelastung insgesamt geringer als bei vergleichbaren Verfahrensschritten mit niedrigerem Drehmoment. Insgesamt erlaubt ein höheres Drehmoment eine höhere Schnecken-Drehzahl und damit auch einen höheren Durchsatz.

Einer Erhöhung des Drehmoments sind jedoch primär durch die Werkstoffkennwerte der Schneckenwelle und der Schneckenelemente und die durch die Ausführung der Verzahnung bestimmte Gestaltfestigkeit der Elemente Grenzen gesetzt, hierüber wird das maximal übertragbare Drehmoment letztlich bestimmt. Zwar lassen sich durch bestimmte materialspezifische Nachbehandlungen noch geringe Drehmomentsteigerungen erzielen, diese sind jedoch marginal und in der Regel mit hohen Kosten verbunden.

Eine weitere Möglichkeit zur Erhöhung des Durchsatzes ist die Vergrößerung des zur Verfügung stehenden Volumens, das in der Regel als Volumigkeit in Form des Verhältnisses des Schneckenaußendurchmessers Dₐ zum Schneckeninnendurchmesser Dᵢ angegeben ist. Übliche Volumigkeiten beispielsweise bei gleichsinnig drehenden Doppelschneckenextrudern liegen im Bereich zwischen 1,4 - maximal 1,6. Eine Vergrößerung des Volumens durch eine Vertiefung der Schneckengänge bei gleichbleibendem Achsabstand bietet zwar einen verbesserten Einzug und eine geringere Scherung, auch werden geringere Materialtemperaturen aufgrund eines geringeren Energieeintrags erreicht, so dass sich letztlich durchsatzerhöhend höhere Schneckendrehzahlen fahren lassen. Nachteilig hierbei ist aber, dass mit zunehmender Volumigkeit bei gleichem Achsabstand die Schneckenwelle immer dünner wird, oder die Wandung des Schneckenelements sehr dünn wird. Bei großen Volumigkeiten, die Werte > 1,6 annehmen, führen diese geometriebedingten Umstände dazu, dass hohe Drehmomente nicht mehr übertragen werden können, da die bei der Drehmomentübertragung von der Schneckenwelle auf die Schneckenelemente übertragenen Kräfte zu lokalen unzulässig hohen Spannungen und letztlich zu einer Beschädigung der Welle-Nabe-Verbindung führen.

Eine Extruderschnecke der eingangs genannten Art ist aus JP 2004 044660 A bekannt. Dort ist der Druckwinkel der das Drehmoment übertragenen Zahnflanke kleiner als der Druckwinkel der gegenüberliegenden Zahnflanke, die das Drehmoment übertragende Zahnflanke steht damit unter einem kleineren Winkel zur Normalen auf die Drehachse als die gegenüberliegende Zahnflanke. Die das Drehmoment übertragene Zahnflanke der Innen- und der Außenverzahnung weist jeweils eine Evolventenform auf. Zwar kann hiermit eine gewisse Erhöhung des übertragbaren Drehmoments erreicht werden, gleichwohl ergeben sich aus der dargestellten Verzahnungsgeometrie nach wie vor hohe Spreiz- beziehungsweise Radialkräfte, die den Einsatz begrenzen.

Der Erfindung liegt damit das Problem zugrunde, eine Extruderschnecke anzugeben, die demgegenüber verbessert ist und generell eine Übertragung sehr hoher Drehmomente, nicht zuletzt insbesondere bei großvolumigen Schnecken zulässt.

Zur Lösung dieses Problems ist bei einer Extruderschnecke der eingangs genannten Art erfindungsgemäß vorgesehen, dass der kleinere Winkel zwischen 0° und 5° und der größere Winkel zwischen 45° und 15° beträgt.

Anders als im Stand der Technik schlägt die Erfindung den Einsatz einer asymmetrischen Verzahnung mit einer speziellen Flankengeometrie vor. Mit dieser asymmetrischen Verzahnung lässt sich eine eklatante Drehmomentsteigerung bei unterschiedlichen Anwendungsfällen der Extruder erzielen. Der Erfindung liegt die Überlegung zugrunde, dass Extruderschnecken eine ausgezeichnete Vorzugsdrehrichtung besitzen, das heißt, im Extruderbetrieb, wenn also Material gefördert und verarbeitet werden soll, drehen sie ausschließlich in eine Richtung. Bezogen auf diese Drehrichtung weisen nun bei dem erfindungsgemäßen Zahnprofil diejenigen Zahnflanken der Außen- und der Innenverzahnung, die einander angreifen und über die das Drehmoment von der Wellenaußenverzahnung zur Nabeninnenverzahnung übertragen wird, einen relativ kleinen Winkel zur Normalen auf die Drehachse auf. Demgegenüber verläuft die gegenüberliegende Zahnflanke, die an der Momentenübertragung nicht teilnimmt, unter einem deutlich größeren Winkel bezüglich der Achsnormalen. Aufgrund dieser Asymmetrie zeigt das erfindungsgemäße Zahnprofil einen wesentlich breiteren Zahnfuß im Vergleich zu der ausschließlich symmetrischen Keilwellenverzahnung. Dieser breitere Zahnfuß ermöglicht eine deutlich höhere Momentenübertragung, der Einfluss etwaiger am Zahnfuß auftretender Spannungen, vornehmlich Kerbspannungen, ist dadurch wesentlich geringer. Aufgrund der gewählten Steilheit der drehmomentübertragenden, aneinander angreifenden Zahnflanken, also der vorlaufenden Außenverzahnungsflanke und der nachlaufenden Innenverzahnungsflanke, reduziert sich auch die in der Nabe eingeleitete Radialspannungskomponente eklatant, vielmehr liegen im Wesentlichen oder ausschließlich Tangentialspannungen vor, wobei dieser Spannungsanteil mit zunehmender Flankensteilheit zunimmt. Hierdurch werden über die Lastflanken die in die Nabe eingetragenen Spreizkräfte deutlich verringert, was den Einsatz von normalspannungsempfindlichen Werkstoffen wie beispielsweise durchgehärteten verschleißfesten Schneckenelementen begünstigt und auch das Beanspruchungsverhalten bei Naben ohne rotationssymmetrische Außenkontur (speziell mit abschnittsweise sehr geringen Wandstärken) sehr günstig beeinflusst. Das heißt, die sich bei der Momentenübertragung einstellenden Spannungsverhältnisse werden durch die erfindungsgemäß verwendete asymmetrische Zahnform deutlich verbessert.

Ein weiterer besonderer Vorteil der asymmetrischen Zahnform liegt darin, dass die Zähnezahl im Vergleich zu einer üblichen Evolventenverzahnung deutlich erhöht werden kann, wodurch eine höhere Tragfähigkeit erreicht wird und mithin ein höheres Drehmoment übertragen werden kann. Waren bei üblichen Evolventenverzahnungen bisher z.B. 24 Zähne aufgrund des gewählten Moduls vorgesehen, so können jetzt durch entsprechende Modulwahl z.B. 36 Zähne bei deutlich höherer Momentenübertragung vorgesehen werden.

Die erfindungsgemäß vorgesehene Asymmetrie der Welle-Nabe-Verbindung lässt damit eine deutliche Steigerung des von der Schneckenwelle auf die einzelnen Elemente übertragbaren Drehmoments im Vergleich zur im Stand der Technik ausschließlich verwendeten symmetrischen Verzahnung, in der Regel in Form der Evolventenverzahnung, zu. Diese Drehmomentsteigerung lässt sich dabei bei Schnecken beliebiger Volumigkeit erzielen, da aufgrund der last- und spannungsoptimierten Profilauslegung die Beanspruchung im Verbindungsbereich den tatsächlichen Gegebenheiten entsprechend optimiert ist. Auch bei Schnecken mit großer Volumigkeit, also mit einem Dₐ/Dᵢ-Verhältnis > 1,6, bei denen sich das übertragbare Drehmoment limitierende Geometrien aufgrund verringerter Kern- oder Wandstärken, resultierend aus der großen Gangtiefe, ergeben, lassen sich eklatante Drehmomentsteigerungen erzielen und bis dato nicht übertragbare Drehmomente auch bei Volumigkeiten von beispielsweise 1,65 oder 1,7 erzielen.

Der kleinere Winkel an den drehmomentübertragenden Zahnflanken liegt zwischen 0° und 5°, das heißt, er läuft im Falle einer 0°-Lastflanke radial zur Drehachse, maximal nimmt er einen sehr kleinen Winkel von allerhöchstens 5° ein. Der größere Winkel beträgt zwischen 45° und 15°. Zur weiteren Optimierung sollte der kleinere Winkel zwischen 0° und 2° und der größere Winkel zwischen 25° und 35° betragen. Eine konkrete, besonders vorteilhafte Flankengeometrie sieht vor, dass der kleinere Winkel 0° und der größere Winkel 30° beträgt, das heißt, die jeweiligen Lastflanken stehen senkrecht zur Drehachse, die gegenüberliegenden Flanken nehmen zu dieser einen Winkel von 30° ein. Der Eingriffswinkel der Rückflanke in dem angegebenen Basisintervall von 45° - 15° und insbesondere von ca. 30° ermöglicht mit besonderem Vorteil auch ein Rückwärtsdrehen der Schnecken, wie dies in dem seltenen Sonderfall zum Freifahren einer festgefahrenen Schnecke mitunter erforderlich ist. Die 30°-Flanke ermöglicht hierbei annähernd die gleiche Drehmomentübertragung wie bei einer üblichen DIN 5480-Evolventenverzahnung, die aufgrund ihrer Symmetrie generell eine gleichmäßige Übertragungsfähigkeit in beiden Drehrichtungen ermöglicht, und bei denen in der Regel auch 30°-Flanken beidseits vorgesehen sind. An dieser Stelle ist darauf hinzuweisen, dass selbstverständlich jedweder in den angegebenen maximalen Intervallen enthaltene Zwischenwinkel hiermit als erfindungswesentlich offenbart gilt, auch wenn der jeweilige Winkelwert nicht explizit erwähnt ist.

Im Hinblick auf eine optimale Momentenübertragung wie auch insbesondere zur Minimierung der Spreizkräfte bzw. der Radialkräfte, die bei einer 0°-Lastflanke annähernd Null sind, sieht eine vorteilhafte Erfindungsausgestaltung vor, die einander gegenüberliegenden Flankenabschnitte, gleich ob Lastflanke oder Rückflanke, ebenflächig auszugestalten. Hierbei ist unter dem Begriff "ebenflächig" sowohl eine ebene wie auch eine minimal ballige Fläche zu verstehen, sofern dies im einen oder anderen Fall zweckmäßig ist. Dies gilt auch betreffend die Form der Zahnköpfe der Außen- und der Innenverzahnung, die ebenfalls im Wesentlichen ebenflächig sein können.

Eine besonders vorteilhafte Weiterbildung der Erfindung sieht vor, dass am Zahnkopf der Innenverzahnung und/oder der Außenverzahnung eine derart geformte und/oder positionierte Ausnehmung vorgesehen ist, dass an der gegebenenfalls jeweiligen lasttragenden Zahnflanke ein Zahnsteg verbleibt. Der Zahnkopf der Innen- und/oder Außenverzahnungen ist dabei oberflächlich über wenigstens eine Ausnehmung derart oberflächlich profiliert, dass an der jeweils drehmomentübertragenden Flanke eine Überhöhung oder ein Zahnsteg verbleibt, der in die darin anschließende Ausnehmung abfällt, bevorzugt über eine im Hinblick auf etwaige Kerbspannungen vorteilhafte Ausrundung. Hierdurch werden Effekte in Form von Kantenpressungsüberhöhungen im Bereich der aneinander angreifenden lastübertragenden Flanken minimiert. Nachdem der verbleibende Zahnsteg oder die Überhöhung etwas plastisch fließen kann, kann ein Abbau dort entstehender Kräfte oder Druckspannungen erreicht werden. Das heißt, durch die entsprechende Profilierung wird dort ein bezogen auf den üblichen Zahnquerschnitt gesehen etwas weicherer, plastifizierbarer Bereich geschaffen, der dem Spannungsabbau dient. Diese Profilierung am Zahnkopf kann vorzugsweise an der Innenverzahnung der Schneckenelemente vorgesehen sein, da bei der Drehmomentübertragung die höchsten Druckspannungen im Bereich der momentübertragenden Zahnflanke an der freiliegenden Ecke zum Zahnkopf hin entstehen. Zur Optimierung der Spannungsverhältnisse können diese Spannungsspitzen aufgrund der erfindungsgemäß vorgesehenen Profilierung vorteilhaft abgebaut werden. Dabei sollte sich die Ausnehmung zweckmäßigerweise von der unter dem größeren Winkel stehenden Zahnflanke ausgehend im Wesentlichen innenflächig in Richtung der anderen Zahnflanke erstrecken. Es wird also eine Art Plateau am Zahnkopf gebildet, das in den demgegenüber höheren Zahnsteg übergeht. Dieses gebildete Plateau wie auch generell ein im Wesentlichen ebenflächiger Zahnkopf vollzieht natürlich den Außen- oder Innenradius am Ort des jeweiligen Elements nach, kann also mithin radiusabhängig leicht gebogen sein.

Ein zentrales, die Momentenübertragung im Stand der Technik bei den symmetrischen Profilen limitierendes Problem bilden weiterhin die durch die in der Regel sehr scharfen Fußausrundungen am Zahngrund entstehenden hohen Kerbwirkungen bzw. Kerbspannungen und die daraus resultierende extreme Belastungsüberhöhung. Eine volle Fußausrundung ist zwar in ISO 4156 vorgesehen, aber wegen der deutlichen Reduzierung des Wellenkemquerschnitts bzw. Elementwandquerschnitts nachteilig. Die ISO 4156 und vergleichbare Normen sehen dabei einen konstanten Ausrundungsradius vor. In jedem Fall ist auch hierdurch die Steigerung der übertragbaren Drehmomente im Stand der Technik begrenzt.

Demgegenüber sieht die Erfindung vor, den Zahngrund der Außen- und der Innenverzahnung vollständig mit einer optimierten Radienvariation auszurunden. Dies ist bei dem erfindungsgemäßen asymmetrischen Zahnprofil aufgrund der Stellung der Flanken ohne weiteres möglich. Denn der Wellenkernquerschnitt wie auch der Elementenkernquerschnitt wird trotz voller Ausrundung nur unwesentlich verringert, da der Fuß aufgrund der Asymmetrie relativ breit ist und die variierenden Ausrundungsradien keine oder nur eine minimale Reduzierung der Restquerschnitte hervorrufen. Hier spielt auch der Umstand, dass die Zähnezahl deutlich erhöht werden kann, mithin also der Zahnabstand reduziert werden kann, eine besondere Rolle. Der Radius im Zahngrund der Außenverzahnung kann dabei zwischen 0,35 m und 0,45 m, insbesondere 0,4 m, und der Radius am Zahngrund der Innenverzahnung zwischen 0,3 m und 0,4 m, insbesondere bei 0,35 m, betragen. Selbstverständlich richtet sich der jeweils gewählte Radius nach dem Wellen- bzw. Nabendurchmesser sowie dem gewählten Modul.

Der Modul der Außen- und Innenverzahnung sollte weiterhin derart gewählt sein, dass zumindest die Zähne der Außenverzahnung zumindest im Zahnkopfbereich biegeelastisch sind. Eine leichte Biegeelastizität zumindest im oberen Zahnbereich ist dahingehend vorteilhaft, dass sich der Zahn besser an das Gegenstück anpassen kann. Aufgrund der Asymmetrie nimmt die Zahnbreite zum Kopf hin ab, wodurch bei entsprechend hohem Modul eine naturgemäß geringe Biegeelastizität zur Förderung eines abweichungstoleranten Verhaltens im Zahnkopfbereich, gegebenenfalls unter Ausnutzung einer teilplastischen Verformung auch im Zahnfußbereich, erzielt werden kann. Der von Haus aus aufgrund der Asymmetrie höher wählbare Modul bietet in Verbindung mit der Biegeelastizität eine noch höhere Tragkraft zur weitergehenden Erhöhung des übertragbaren Drehmoments sowie zur Optimierung des Formschlusses zwischen den Verzahnungen.

Eine weitere Verbesserung kann erzielt werden, wenn die Verzahnung der erfindungsgemäßen Extruderschnecke eine Durchmesserzentrierung über die Stegköpfe aufweist. Die Durchmesserzentrierung kann eingesetzt werden, wenn besondere Anforderungen an die Rundlauftoleranzen gestellt werden.

Schließlich kann vorgesehen sein, dass die Schneckenwelle zumindest im Außenverzahnungsbereich aus einem plastifizierbaren Material besteht, während die Schneckenelemente zumindest im Bereich der Innenverzahnung demgegenüber härter sind. Dies ermöglicht eine gewisse plastische Anpassung der Außenverzahnung an ihr Gegenüber und damit eine Verbesserung des Formschlusses und der Übertragungseigenschaften der Welle-Nabe-Verbindung.

Neben der Extruderschnecke selbst betrifft die Erfindung ferner einen Extruder, umfassend eine oder mehrere Extruderschnecken der vorbeschriebenen Art. Es kann sich dabei um einen Einschneckenextruder oder aber um einen gleich- oder gegensinnig laufenden Doppelschneckenextruder oder um einen Mehrwellenextruder handeln. Die mit der erfindungsgemäßen Extruderschnecke erzielbaren Vorteile sind bei den unterschiedlichen Extrudertypen gleichermaßen realisierbar. Insbesondere können unter Verwendung der erfindungsgemäßen Extruderschnecken Hochleistungsextruder mit sehr hoher Volumigkeit > 1,6, also beispielsweise von 1,65 - 1,7, realisiert werden, die die Übertragung sehr hoher Drehmomente bzw. die Realisierung hoher spezifischer Drehmomentdichten M_{d} / a³ (M_{d} = Drehmoment, a = Achsabstand) sowie hohe Drehzahlen zulassen, nachdem die Welle-Nabe-Verbindung im Hinblick auf die Momentenübertragung sowie die entstehenden Druck- und Kerbspannungen optimiert ist.

Die Erfindung betrifft neben der eine erfindungsgemäß asymmetrische Welle-Nabe-Verbindung aufweisenden Extruderschnecke allgemein eine solche Welle-Nabe-Verbindung, bei der die Welle eine Außenverzahnung und die Nabe eine in diese eingreifende Innenverzahnung aufweisen, gemäß dem Oberbegriff des Anspruchs 15. Diese erfindungsgemäße Welle-Nabe-Verbindung zeichnet sich dadurch aus, dass der kleinere Winkel zwischen 0° und 5° und der größere Winkel zwischen 45° und 15° beträgt.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung eines Extruders,
- Fig. 2: eine Prinzipdarstellung als Explosionsansicht einer Steckextruderschnecke,
- Fig. 3: eine Schnittansicht durch zwei in ihrer Einbauposition zueinander dargestellte erfindungsgemäße Extruderschnecken, die im Betrieb gleichsinnig drehen und miteinander kämmen,
- Fig. 4: eine vergrößerte Darstellung der Außenverzahnung der Schneckenwelle,
- Fig. 5: eine vergrößerte Darstellung der Innenverzahnung eines Schneckenelements, und
- Fig. 6: eine Darstellung der beiden miteinander kämmenden Verzahnungen.

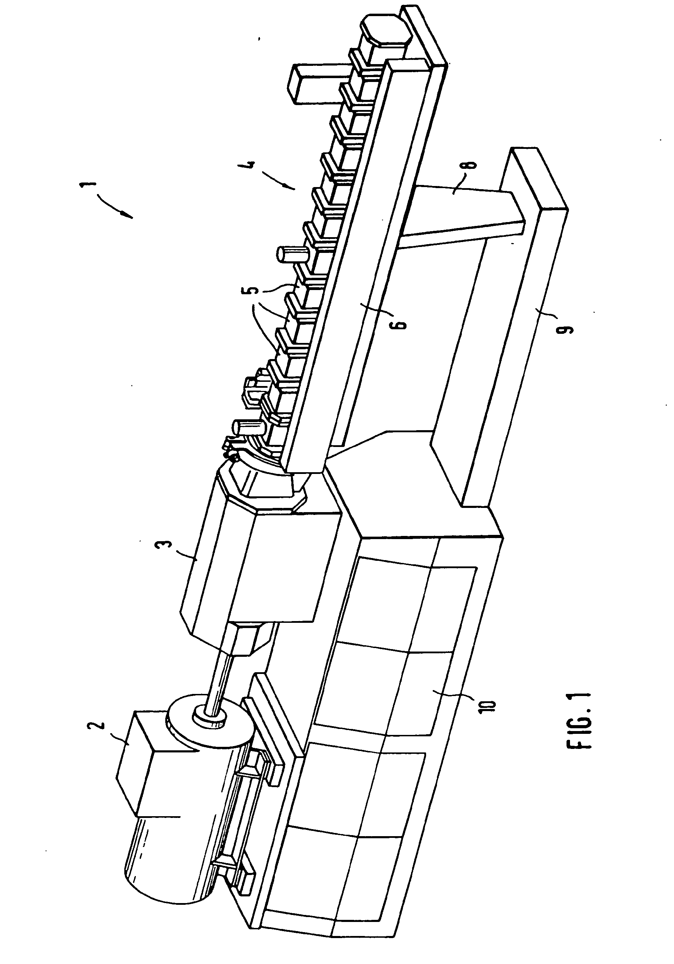

Fig. 1 zeigt einen Extruder 1 mit einem Motor 2 mit nachgeschaltetem Getriebe 3 und einem Extrusionszylinder 4, bestehend aus mehreren Zylinderabschnitten 5, in dessen Innerem im gezeigten Beispiel zwei Extruderschnecken in entsprechenden Bohrungen aufgenommen sind, die über das Getriebe 3, mit dem sie über eine nicht näher gezeigte, jedoch hinlänglich bekannte Kopplung gekoppelt sind, angetrieben werden. Es handelt sich beispielsweise um einen gleichsinnig drehenden Extruder. Der Extrusionszylinder 4 ist zusammen mit sämtlichen benötigten Kühlmittel-, Strom- und Steuerleitungen, die in einem entsprechenden Einbaukasten 6 verlegt sind, auf einem Träger 7, der wiederum auf einer Wange 8 des Maschinenrahmens 9 abgestützt ist, aufgebaut. In einem Versorgungs- und Steuerschrank 10 befinden sich die Kühlmittel- und Versorgungseinrichtungen sowie Steuerungseinrichtungen, über die die Versorgung der einzelnen Komponenten erfolgt. Der Aufbau eines solchen Extruders ist hinlänglich bekannt.

Wie beschrieben sind im Inneren des Extrusionszylinders bestehend aus den mehreren miteinander lösbar verbundenen Zylinderabschnitten 5 zwei Extruderschnecken angeordnet. Bei den in Rede stehenden Extruderschnecken handelt es sich um sogenannte Steckschnecken, die speziell im Hinblick auf das zu bearbeitende Material bzw. herzustellende Produkt aufgebaut bzw. konfiguriert werden können. Sie sind dem Extrusionszylinder 4 bei Bedarf entnehmbar.

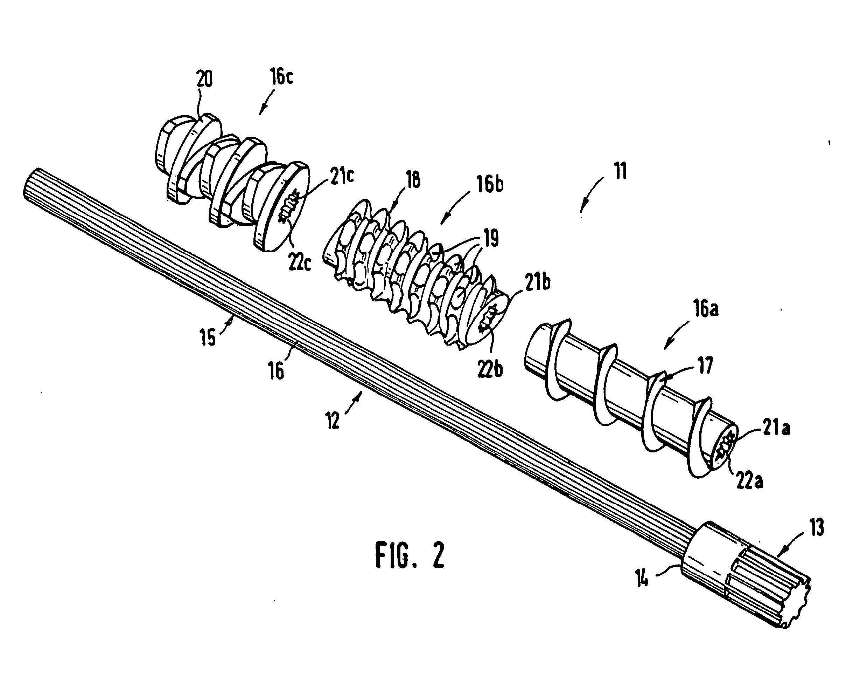

Fig. 2 zeigt in Form einer Prinzipdarstellung eine Extruderschnecke 11, bestehend aus einer Welle 12, die an ihrem hinteren breiteren Ende zum einen eine erste Außenverzahnung 13 aufweist, über die sie mit dem Getriebe 3 antriebsmäßig verkoppelbar ist. An einen Anschlagbund 14 schließt sich ein Wellenabschnitt 15 mit einer Außenverzahnung 16 an. Auf diesen Wellenabschnitt 15 sind abhängig vom zu verarbeitenden Material bzw. herzustellenden Produkt verschiedene separate Schneckenelemente aufsteck- oder auffädelbar und am Anschlagbund 14 gegenlagerbar. Fig. 2 zeigt exemplarisch drei Schneckenelemente 16a, 16b und 16c. Bei dem Schneckenelement 16a kann es sich beispielsweise um ein Förderelement handeln, das eine Schnecke 17 aufweist, wobei im Schneckengang das Material gefördert wird. Beim Schneckenelement 16b kann es sich beispielsweise um ein Mischelement handeln, das ebenfalls eine Schnecke 18 aufweist, die jedoch Durchbrechungen 19 aufweist. Schließlich kann es sich bei dem Schneckenelement 16c um ein Knetelement handeln, das entsprechende Knetabschnitte 20 besitzt. Über ein solches Knetelement werden die zu verarbeitenden Materialien unter hohem Energieeintrag bearbeitet und beispielsweise plastifiziert oder aufgeschmolzen, je nach Anwendung.

Zum Aufstecken auf den Wellenabschnitt 15 weist jedes Schneckenelement 16a, 16b, 16c eine zentrale Bohrung 21a, 21b, 21c auf, an deren Innenseite, also der Nabe, jeweils eine Innenverzahnung 22a, 22b, 22c vorgesehen ist, mit welcher sie auf die Außenverzahnung 16 des Wellenabschnitts 15 aufgesteckt wird, so dass die Innenverzahnung und die Außenverzahnung miteinander kämmen. Es handelt sich dabei um eine formschlüssige Welle-Nabe-Verbindung, die nachfolgend im Detail beschrieben wird.

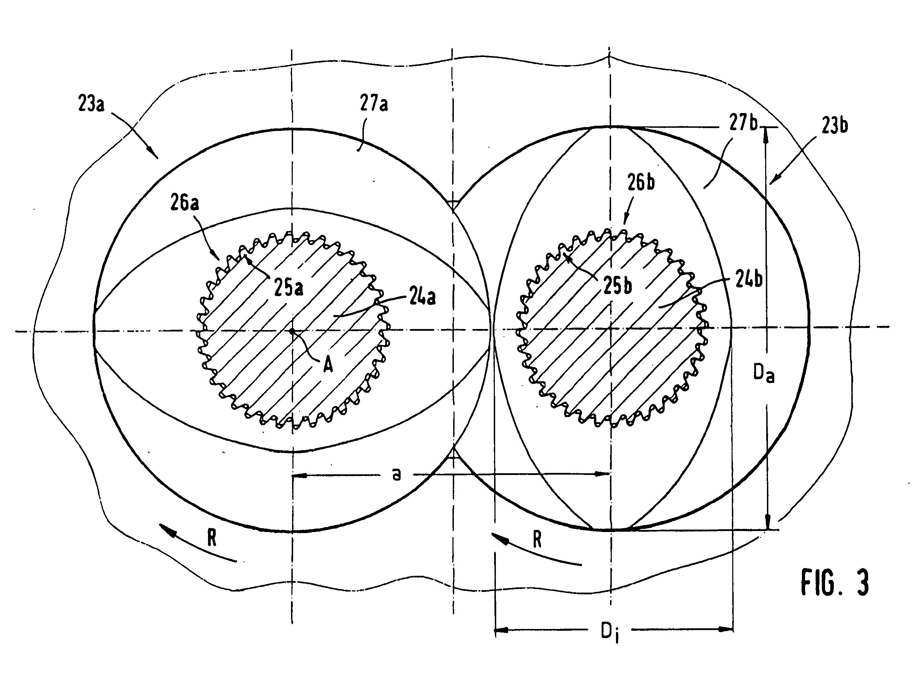

Fig. 3 zeigt zwei erfindungsgemäße Extruderschnecken 23a, 23b, die parallel nebeneinander dargestellt sind, so wie sie auch im Extrusionszylinder 4 bezüglich einander positioniert sind. Die Schneckenwellen 24a, 24b sind um den Achsabstand a voneinander beabstandet. Dargestellt ist ferner der Schneckenaußendurchmesser Dₐ sowie der Schneckeninnendurchmesser Dᵢ am Schneckengrund. Aus dem Verhältnis Dₐ / Dᵢ ergibt sich die Volumigkeit der Schnecke bzw. des Extruders, wobei die Volumigkeit eine Kenngröße eines Extruders ist.

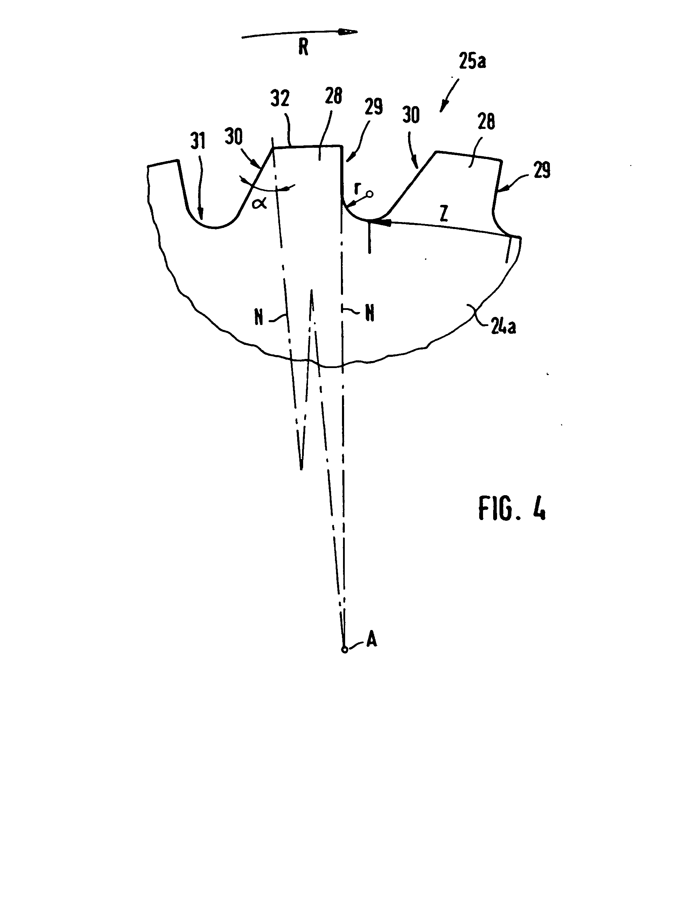

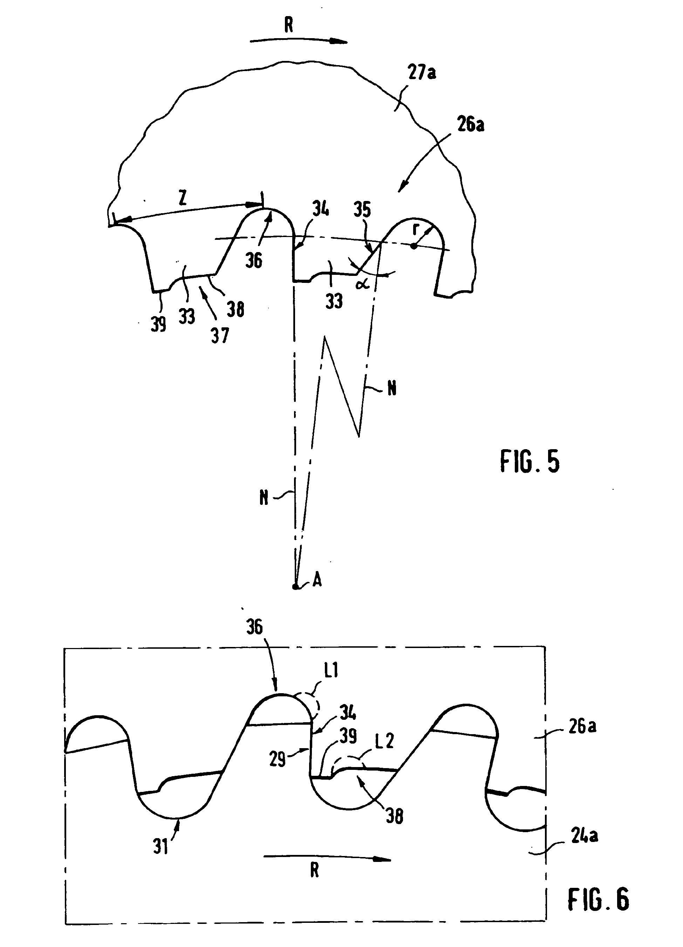

Gezeigt ist ferner die Außenverzahnung 25a und 25b der jeweiligen Wellen 24a und 24b sowie die Innenverzahnungen 26a und 26b an der Nabe der jeweiligen Schneckenelemente 27a und 27b. Aus Fig. 3 ist ersichtlich, dass es sich jeweils um asymmetrische Verzahnungsprofile handelt, die speziell bezogen auf eine bestimmte Vorzugsdrehrichtung der Extruderschnecken 23a, 23b, die mit den beiden mit R gekennzeichneten Pfeilen darstellt ist, ausgelegt sind. Einzelheiten der erfindungsgemäßen Verzahnungsgeometrie ergeben sich aus den Figuren 4 und 5.

Fig. 4 zeigt in Form einer vergrößerten Detailansicht einen Ausschnitt aus der Außenverzahnung 25a der Schneckenwelle 24a, wobei die gleichen Ausführungen natürlich bezüglich der Verzahnung der Welle 24b gelten. Gezeigt sind in einer Detailansicht die Zähne 28. Jeder Zahn 28 besitzt bezogen auf die Vorzugsdrehrichtung R eine vorlaufende Zahnflanke 29, die mit einer entsprechenden Zahnflanke der Innenverzahnung am Schneckenelement zusammenwirkt bzw. an dieser angreift. Gegenüberliegend befindet sich die nachlaufende Rückflanke 30 eines Zahns 28, die bei Bewegung in der Vorzugsdrehrichtung R in der Regel einen minimalen Abstand (Flankenspiel) von der entsprechend gegenüberliegenden Zahnflanke der Innenverzahnung im Bereich weniger hundertstel Millimeter besitzt.

Das erfindungsgemäße asymmetrische Zahnprofil zeichnet sich nun dadurch aus, dass die vorlaufende drehmoment- oder lastübertragende Zahnflanke 29, die zumindest in ihrem oberen zum freien Zahnkopf liegenden Bereich ebenflächig ausgeführt ist, unter einem Winkel von 0° bezogen auf die Normale N auf die Drehachse A der Schneckenwelle steht. Das heißt, die Zahnflanke 29 verläuft im last-übertragenden, an der gegenüberliegenden Flanke angreifenden Bereich radial zur Drehachse A.

Demgegenüber nimmt die nachlaufende Zahnflanke 30 einen Winkel α von 30° zur Normalen N auf die Drehachse A ein. Auch diese Zahnflanke 30 ist bis zum Übergang in den Zahngrund ebenflächig. Ersichtlich bildet sich aufgrund dieser Anordnung ein sehr breiter Zahnfuß Z aus, nachdem zum Zahngrund 31 hin die Zahnflanken auseinanderlaufen. Der Zahngrund 31 ist ferner vollständig ausgerundet, was aufgrund der Breite des Zahnfuß Z und damit des sich zum Wellenkern verjüngenden Zahnzwischenraums möglich ist. Der Rundungsradius r beträgt beispielsweise 0,35 m. Der Zahnkopf 32 selbst ist im gezeigten Beispiel im Wesentlichen ebenflächig, er ist lediglich leicht gewölbt entsprechend dem Außenradius der Außenverzahnung.

In ähnlicher Weise ist das Profil der Innenverzahnung 26a des Schneckenelements 27a konzipiert, das in Fig. 5 gezeigt ist, wobei entsprechende Ausführungen natürlich auch für die Innenverzahnung 26b gelten. Auch hier sind die Zähne 33 gezeigt, wobei jeder Zahn 33 eine bezogen auf die Vorzugsdrehrichtung R nachlaufende drehmoment- oder lastübertragende Flanke 34 besitzt, die auch hier einen Winkel von 0° zur Normalen N auf die Drehachse A der Schneckenwelle besitzt. Die gegenüberliegende, in der Vorzugsdrehrichtung R vorlaufende Zahnflanke 35 steht auch hier unter einem Winkel α von 30° zur Normalen N auf die Drehachse A. Das heißt, die Winkelstellung der einzelnen Flanken entspricht identisch der der Außenverzahnung, was einen guten Formschluss ermöglicht, wobei auch hier natürlich die entsprechenden Zahnflanken im anliegenden Bereich ebenflächig ausgeführt sind.

Auch hier ergibt sich ein sehr breiter Zahnfuß Z, verglichen mit einer üblichen symmetrischen Keilwellenverzahnung, was wie beschrieben auf die zum Zahngrund hin auseinander laufenden Zahnflanken zurückzuführen ist. Ebenfalls ist der Zahngrund 36 vollständig ausgerundet, der Radius r beträgt hier ca. 0,4 m. Die Möglichkeit zur vollständigen Ausrundung ist auch hier auf den sehr breiten Zahnfuß Z und daraus resultierend den sich verjüngenden Zahngrund 36 zurückzuführen. Sowohl bei der Schneckenwelle als auch den Schneckenelementen führt vorteilhaft die vollständige Ausrundung zu einer geringen Verringerung des jeweiligen Kernquerschnitts. Das heißt, bei der erfindungsgemäßen Verzahnung können die aus der Ausrundung resultierenden besonderen Vorteile hinsichtlich der Kerbwirkung vollständig ausgenützt werden.

Anders als beim Zahnkopf 32 der Außenverzahnung ist bei der Innenverzahnung der Zahnkopf 37 profiliert. Es ist eine Ausnehmung 38 vorgesehen, die sich von der unter dem 30°-Winkel stehenden vorlaufenden Zahnflanke 35 zur nachlaufenden 0°-Lastflanke 34 erstreckt, jedoch über einen Radius ausläuft, so dass ein Zahnsteg 39 verbleibt, der sich zur Lastflanke 34 hin erstreckt. Dieser aus einer Materialausnehmung resultierende Zahnsteg 39 ermöglicht einen starken Abbau von insbesondere in diesem Bereich bei der Drehmomentübertragung entstehenden Druckspannungen durch ein plastisches Fließen des Zahnstegmaterials. Hierdurch kann der Effekt der Kantenpressungsüberhöhung in diesem Bereich aufgrund des Spannungsabbaus vorteilhaft minimiert werden.

Fig. 6 zeigt in Form einer Prinzipdarstellung die beiden miteinander in Eingriff stehenden Verzahnungen. Dreht die Schneckenwelle 24a in Vorzugsrichtung R, so erfolgt ein Drehmomentübertrag von der 0°-Zahnflanke 29 auf die 0°-Zahnflanke 34. Ersichtlich liegen die Zahnflanken aufgrund ihrer Ebenflächigkeit und ihres an allen Stellen identischen Winkels großflächig aufeinander, so dass die Flächenpressung reduziert wird. Der Reduzierung der Flächenpressung ist ferner nützlich, da aufgrund des asymmetrischen Profils die Zahl der Zähne der jeweiligen Verzahnungen deutlich erhöht werden kann, das heißt, der Modul kann infolge der Profilasymmetrie größer gewählt werden als bei einer vergleichbaren symmetrischen Normverzahnung.

Im Übrigen erlaubt die 0°-Zahnflanke eine thermische Ausdehnung, die sich vorzugsweise in radialer Richtung, parallel zur Lastflanke, auswirkt. Eine Drehmomentübertragung ist dabei weiterhin spielfrei möglich, weshalb das erfindungsgemäße asymmetrische Profil auch für Temperaturwechselbelastung geeignet ist. Des Weiteren führt die 0°-Flanke zu einer Minimierung von Spreizkräften in der Nabe, also der Innenverzahnung des Schneckenelements. Denn aufgrund der Flankenstellung zueinander werden fast ausschließlich Tangentialkräfte in den jeweiligen Zahn der Innenverzahnung eingeleitet, jedoch keine Radialkräfte, wie dies bei üblichen Zahnwellenprofilen der Fall ist. Dies ermöglicht den Einsatz auch normalspannungsempfindlicher Werkstoffe, wie beispielsweise durchgehärteter verschleißfester Werkstoffe im Bereich der Innenverzahnung oder aber die Verwendung von Keramikelementen. Auch das Beanspruchungsverhalten der Nabe speziell bei abschnittsweise sehr geringer Wandstärke wird aufgrund der Minimierung der Spreizkräfte günstig beeinflusst.

Besonders vorteilhaft wirkt sich die jeweilige Ausrundung im jeweiligen Zahngrund 31 bzw. 36 aus. An den Übergängen der jeweils lasttragenden Zahnflanken 29 und 43 zum Zahngrund treten die höchsten Spannungen und damit die höchste Kerbwirkung auf. Durch die optimierte Geometrie im Zahngrund aufgrund der vollen Fußausrundung können die Kerbwirkungen aber deutlich reduziert werden, gleichzeitig bleibt aber aufgrund der relativ geringen Ausrundungsradien infolge der Verschmälerung des Zahnzwischenraums der Wellenkernquerschnitt bzw. der entsprechende Querschnitt am Schneckenelement noch hinreichend stark. Anders als bei symmetrischen Zahnwellenprofilen mit einem sehr breiten Zahnzwischenraum und sehr scharfen Übergängen vom Zahn zum Zahngrund ist der Bereich erhöhter Spannungen aufgrund der vollen Ausrundung relativ klein, er ist exemplarisch in Fig. 6 über die gestrichelte Linie L1 angedeutet.

Wie beschrieben kann über den Zahnsteg 39 ein Abbau von in diesem Kantenbereich entstehenden Druckspannungen erfolgen. Aufgrund eines plastischen Verhaltens dieses Zahnstegs werden die Druckspannungen verlagert, ein Spannungszentrum bildet sich, wie durch die Linie L2 dargestellt, im Bereich des Übergangs des Zahnstegs 39 zur Ausnehmung 38 hin aus.

Ein weiterer Vorteil des erfindungsgemäß asymmetrischen Zahnprofils liegt darin, dass ein Zahn zumindest im oberen Bereich des Zahnkopfes etwas biegeelastisch ist, nachdem er sich wie in den Figuren gezeigt vom Zahnfuß zum Zahnkopf deutlich verjüngt. Diese Biegeelastizität ist dahingehend förderlich, ein abweichungstolerantes Verhalten zu fördern, gegebenenfalls unter Ausnutzung einer geringen teilplastischen Verformung im Zahnfußbereich. Das heißt, aufgrund dieser Biegeelastizität besteht die Möglichkeit, sich bei der Drehmomentübertragung dem Gegenlager, also dem Zahn der Innenverzahnung, anzupassen bzw. etwaige Toleranzen auszugleichen. Dies insbesondere deshalb, als in der Regel die Innenverzahnung deutlich härter, gegebenenfalls in besonderer Weise oberflächenbehandelt ist. Bevorzugt wird hierzu ein Schneckenwellenwerkstoff mit großem Streckgrenzenverhältnis gewählt, was zu erhöhter Dauerfestigkeit auch unter dynamischer Belastung führt. Eine Drehmomentenerhöhung kann im Übrigen generell z.B. durch Kugelstrahlen, Nachrollen, Kaltwalzen oder dergleichen der Verzahnungsteile sowohl im Bereich der Außen- als auch der Innenverzahnung erreicht werden.

Insgesamt bietet die erfindungsgemäße Extruderschnecke bzw. das erfindungsgemäße asymmetrische Profil die Möglichkeit, deutlich höhere Drehmomente als mit vergleichbaren symmetrischen Profilen übertragen zu können, was bereits aus der erfindungsgemäßen Profilform resultiert. Denn es wird eine hinsichtlich der Kerbwirkungen wie auch der Druckspannungen optimierte Geometrie vorgeschlagen. Ein weiterer Vorteil liegt in der Möglichkeit, die Zahnzahl deutlich zu erhöhen, was ebenfalls der Möglichkeit zur Steigerung des übertragbaren Drehmoments förderlich ist. Ein besonderer Vorteil ist schließlich darin zu sehen, dass unter Verwendung des erfindungsgemäßen Profils erstmals die Möglichkeit besteht, hohe Drehmomente auch bei extrem großvolumiger Auslegung der Schnecken bzw. Extruder im Bereich oberhalb eines Verhältnisses Dᵢ / Dₐ > 1,6, also beispielsweise von 1,66, 1,68 oder 1,70 oder größer, zu bieten. Dies führt zu einer eklatanten Steigerung der Leistungseffizienz erfindungsgemäßer Extruder auf bisher nicht erzielbare Durchsätze.

## Patentansprüche

1. Extruderschnecke bestehend aus einer Schneckenwelle und mehreren auf dieser lösbar aufsteckbaren oder aufgesteckten Schneckenelementen, wobei die Schneckenwelle eine Außenverzahnung und die Schneckenelemente eine in diese eingreifende Innenverzahnung aufweisen, wobei das Zahnprofil der Zähne (28, 33) der Außen- und der Innenverzahnung (16, 25a, 25b, 22a, 22b, 22c, 26a, 26b) asymmetrisch ist, wobei bezogen auf eine Vorzugsdrehrichtung (R) der Extruderschnecke (12, 23a, 23b) die das Drehmoment übertragenden Zahnflanken (29, 34) der Zähne (28, 33) der Außen- und der Innenverzahnung (16, 25a, 25b, 22a, 22b, 22c, 26a, 26b) unter einem kleineren Winkel zur Normalen (N) auf die Drehachse (A) stehen als die jeweils am Zahn (28, 33) gegenüberliegenden Zahnflanken (30, 35) der Außen- und der Innenverzahnung (16, 25a, 25b, 22a, 22b, 22c, 26a, 26b), **dadurch gekennzeichnet, dass** der kleinere Winkel zwischen 0° und 5° und der größere Winkel zwischen 45° und 15° beträgt.

2. Extruderschnecke nach Anspruch 1, **dadurch gekennzeichnet, dass** der kleinere Winkel zwischen 0° und 2° und der größere Winkel zwischen 25° und 35° beträgt.

3. Extruderschnecke nach Anspruch 2, **dadurch gekennzeichnet, dass** der kleinere Winkel 0° und der größere Winkel 30° beträgt.

4. Extruderschnecke nach einem der vorangehenden Ansprüche, **dadurch gekennzeichnet, dass** die einander gegenüberliegenden Flankenabschnitte der Außen- und der Innenverzahnung (16, 25a, 25b, 22a, 22b, 22c, 26a, 26b) ebenflächig sind.

5. Extruderschnecke nach einem der vorangehenden Ansprüche, **dadurch gekennzeichnet, dass** der Zahnkopf (32, 37) der Außen- und/oder der Innenverzahnung (16, 25a, 25b, 22a, 22b, 22c, 26a, 26b) im Wesentlichen ebenflächig ist.

6. Extruderschnecke nach einem der vorangehenden Ansprüche, **dadurch gekennzeichnet, dass** am Zahnkopf (32, 37) der Innenverzahnung (22a, 22b, 22c, 26a, 26b) und/oder der Außenverzahnung (16, 25a, 25b) eine derart geformte und/oder positionierte Ausnehmung (38) vorgesehen ist, dass an der gegebenenfalls jeweiligen lasttragenden Zahnflanke (29, 34) ein Zahnsteg (39) verbleibt.

7. Extruderschnecke nach Anspruch 6, **dadurch gekennzeichnet, dass** die Ausnehmung (38) von der unter dem größeren Winkel stehenden Zahnflanke (30, 35) ausgehend im Wesentlichen ebenflächig in Richtung der anderen Zahnflanke (29, 34) verläuft

8. Extruderschnecke nach einem der vorangehenden Ansprüche, **dadurch gekennzeichnet, dass** der Zahngrund (31, 36) der Außen- und der Innenverzahnung (16, 25a, 25b, 22a, 22b, 22c, 26a, 26b) ausgerundet ist.

9. Extruderschnecke nach Anspruch 8, **dadurch gekennzeichnet, dass** der Radius (r) im Zahngrund (31) der Außenverzahnung (16, 25a, 25b) zwischen 0,35 m bis 0,45 m, insbesondere 0,4 m und der Radius (r) im Zahngrund (36) der Innenverzahnung (22a, 22b, 22c, 26a, 26b) zwischen 0,3 m und 0,4 m, insbesondere 0,35 m beträgt.

10. Extruderschnecke nach einem der vorangehenden Ansprüche, **dadurch gekennzeichnet, dass** der Modul der Außen- und der Innenverzahnung (16, 25a, 25b, 22a, 22b, 22c, 26a, 26b) derart gewählt ist, dass zumindest die Zähne (28) der Außenverzahnung (16, 25a, 25b) zumindest im Zahnkopfbereich (32) biegeelastisch sind.

11. Extruderschnecke nach einem der vorangehenden Ansprüche, **dadurch gekennzeichnet, dass** die Schneckenwelle (12, 24a, 24b) zumindest im Bereich der Außenverzahnung (16, 25a, 25b) aus einem plastifizierbaren Material besteht, während die Schneckenelemente (16a, 16b, 16c, 27a, 27b) zumindest im Bereich der Innenverzahnung (22a, 22b, 22c, 26a, 26b) demgegenüber härter sind.

12. Extruder umfassend eine oder mehrere Extruderschnecken (11, 23a, 23b) nach einem der vorangehenden Ansprüche.

13. Extruder nach Anspruch 12, **dadurch gekennzeichnet, dass** bei Einsatz von zwei oder mehr Extruderschnecken (11, 23a, 23b) die Extruderschnecken (11, 23a, 23b) gleichsinnig oder gegensinnig drehen.

14. Welle-Nabe-Verbindung, bei der die Welle eine Außenverzahnung und die Nabe eine in diese eingreifende Innenverzahnung aufweisen, wobei das Zahnprofil der Zähne (28, 33) der Außen- und der Innenverzahnung (16, 25a, 25b, 22a, 22b, 22c, 26a, 26b) asymmetrisch ist, wobei bezogen auf eine Vorzugsdrehrichtung (R) der Welle (12, 24a, 24b) die das Drehmoment übertragenden Zahnflanken (29, 34) der Zähne (28, 33) der Außen- und der Innenverzahnung (16, 25a, 25b, 22a, 22b, 22c, 26a, 26b) unter einem kleineren Winkel zur Normalen (N) auf die Drehachse (A) stehen als die jeweils am Zahn (28, 33) gegenüberliegenden Zahnflanken (30, 35) der Außen- und der Innenverzahnung (16, 25a, 25b, 22a, 22b, 22c, 26a, 26b), **dadurch gekennzeichnet, dass** der kleinere Winkel zwischen 0° und 5° und der größere Winkel zwischen 45° und 15° beträgt.

15. Welle-Nabe-Verbindung nach Anspruch 14, **dadurch gekennzeichnet, dass** der kleinere Winkel zwischen 0° und 2° und der größere Winkel zwischen 25° und 35° beträgt.

16. Welle-Nabe-Verbindung nach Anspruch 15, **dadurch gekennzeichnet, dass** der kleinere Winkel 0° und der größere Winkel 30° beträgt.

17. Welle-Nabe-Verbindung nach einem der Ansprüche 14 bis 16, **dadurch gekennzeichnet, dass** die einander gegenüberliegenden Flankenabschnitte der Außen- und der Innenverzahnung (16, 25a, 25b, 22a, 22b, 22c, 26a, 26b) ebenflächig sind.

18. Welle-Nabe-Verbindung nach einem der Ansprüche 14 bis 17, **dadurch gekennzeichnet, dass** der Zahnkopf (32, 37) der Außen- und/oder der Innenverzahnung (16, 25a, 25b, 22a, 22b, 22c, 26a, 26b) im Wesentlichen ebenflächig ist.

19. Welle-Nabe-Verbindung nach einem der Ansprüche 14 bis 18, **dadurch gekennzeichnet, dass** am Zahnkopf (32, 37) der Innenverzahnung (22a, 22b, 22c, 26a, 26b) und/oder der Außenverzahnung (16, 25a, 25b) eine derart geformte und/oder positionierte Ausnehmung (38) vorgesehen ist, dass an der gegebenenfalls jeweiligen lasttragenden Zahnflanke (29, 34) ein Zahnsteg (39) verbleibt.

20. Welle-Nabe-Verbindung nach Anspruch 19, **dadurch gekennzeichnet, dass** die Ausnehmung (38) von der unter dem größeren Winkel stehenden Zahnflanke (30, 35) ausgehend im Wesentlichen ebenflächig in Richtung der anderen Zahnflanke (29, 34) verläuft.

21. Welle-Nabe-Verbindung nach einem der Ansprüche 14 bis 20, **dadurch gekennzeichnet, dass** der Zahngrund (31, 36) der Außen- und der Innenverzahnung (16, 25a, 25b, 22a, 22b, 22c, 26a, 26b) ausgerundet ist.

22. Welle-Nabe-Verbindung nach Anspruch 21, **dadurch gekennzeichnet, dass** der Radius (r) im Zahngrund (31) der Außenverzahnung (16, 25a, 25b) zwischen 0,35 m bis 0,45 m, insbesondere 0,4 m und der Radius (r) im Zahngrund (36) der Innenverzahnung (22a, 22b, 22c, 26a, 26b) zwischen 0,3 m und 0,4 m, insbesondere 0,35 m beträgt.

23. Welle-Nabe-Verbindung nach einem der Ansprüche 14 bis 22, **dadurch gekennzeichnet, dass** der Modul der Außen- und der Innenverzahnung (16, 25a, 25b, 22a, 22b, 22c, 26a, 26b) derart gewählt ist, dass zumindest die Zähne (28) der Außenverzahnung (16, 25a, 25b) zumindest im Zahnkopfbereich (32) biegeelastisch sind.

24. Welle-Nabe-Verbindung nach einem der Ansprüche 14 bis 23, **dadurch gekennzeichnet, dass** die Welle (12, 24a, 24b) zumindest im Bereich der Außenverzahnung (16, 25a, 25b) aus einem plastifizierbaren Material besteht, während die Nabe (16a, 16b, 16c, 27a, 27b) zumindest im Bereich der Innenverzahnung (22a, 22b, 22c, 26a, 26b) demgegenüber härter sind.

## Claims

1. Extruder screw consisting of a screw shaft and plural screw elements mountable or mounted detachably thereon, the screw shaft having external teeth and the screw elements having internal teeth meshing therewith, wherein the profile of the teeth (28, 33) of the external and internal sets of teeth (16, 25a, 25b, 22a, 22b, 22c, 26a, 26b) is asymmetrical, wherein relative to the preferred direction of rotation (R) of the extruder screw (12, 23a, 23b) the torque-transmitting tooth faces (29, 34) of the teeth (28, 33) of the external and internal sets of teeth (16, 25a, 25b, 22a, 22b, 22c, 26a, 26b) are at a smaller angle to the normal (N) to the axis of rotation (A) than the opposing tooth faces (30, 35) on the tooth (28, 33) of the external and internal sets of teeth (16, 25a, 25b, 22a, 22b, 22c, 26a, 26b), **characterised in that** the smaller angle measures between 0° and 5° and the larger angle measures between 45° and 15°.

2. Extruder screw according to claim 1, **characterised in that** the smaller angle measures between 0° and 2° and the larger angle measures between 25° and 35°.

3. Extruder screw according to claim 2, **characterised in that** the smaller angle measures 0° and the larger angle measures 30°.

4. Extruder screw according to one of the preceding claims, **characterised in that** the mutually opposing face sections of the external and internal teeth (16, 25a, 25b, 22a, 22b, 22c, 26a, 26b) are plane.

5. Extruder screw according to one of the preceding claims, **characterised in that** the tooth head (32, 37) of the external and/or internal teeth (16, 25a, 25b, 22a, 22b, 22c, 26a, 26b) is substantially plane.

6. Extruder screw according to one of the preceding claims, **characterised in that** on the tooth head (32, 37) of the internal teeth (22a, 22b, 22c, 26a, 26b) and/or the external teeth (16, 25a, 25b) a recess (38) is provided which is so shaped and/or positioned that a tooth web (39) remains on the tooth face (29, 34) respectively if necessary bearing the load.

7. Extruder screw according to claim 6, **characterised in that** the recess (38) extends from the tooth face (30, 35) standing at the larger angle substantially in a plane manner in the direction of the other tooth face (29, 34).

8. Extruder screw according to one of the preceding claims, **characterised in that** the tooth base (31, 36) of the external and internal teeth (16, 25a, 25b, 22a, 22b, 22c, 26a, 26b) is filleted.

9. Extruder screw according to claim 8, **characterised in that** the radius (R) in the tooth base (31) of the external teeth (16, 25a, 25b) measures between 0.35 m to 0.45 m, in particular 0.4 m and the radius (r) in the tooth base (36) of the internal teeth (22a, 22b, 22c, 26a, 26b) measures between 0.3 m and 0.4 m, in particular 0.35 m.

10. Extruder screw according to one of the preceding claims, **characterised in that** the modulus of the internal and external teeth (16, 25a, 25b, 22a, 22b, 22c, 26a, 26b) is so selected that at least the teeth (28) of the external set of teeth (16, 25a, 25b) is resilient at least in the head region (32) of the teeth.

11. Extruder screw according to one of the preceding claims, **characterised in that** the screw shaft (12, 24a, 24b) consists at least in the region of the external teeth (16, 25a, 25b) of a meltable material, whilst the screw elements (16a, 16b, 16c, 27a, 27b) are harder in comparison at least in the region of the internal teeth (22a, 22b, 22c, 26a, 26b).

12. Extruder comprising one or more extruder screws (11, 23a, 23b) according to one of the preceding claims.

13. Extruder according to claim 12, **characterised in that** where two or more extruder screws (11, 23a, 23b) are used, the extruder screws (11, 23a, 23b) rotate in the same direction or in opposite directions.

14. Shaft-hub combination, in which the shaft has external teeth and the hub has internal teeth meshing therewith, wherein the tooth profile of the teeth (28, 33) of the external and internal sets of teeth (16, 25a, 25b, 22a, 22b, 22c, 26a, 26b) is asymmetrical, wherein relative to a preferred direction of rotation (R) of the shaft (12, 24a, 24b) the torque-transmitting tooth faces (29, 34) of the teeth (28, 33) of the external and internal sets of teeth (16, 25a, 25b, 22a, 22b, 22c, 26a, 26b) are at a smaller angle to the normal (N) to the axis of rotation (A) than the respectively opposite tooth faces (30, 35) on the tooth (28, 33) of the external and internal teeth (16, 25a, 25b, 22a, 22b, 22c, 26a, 26b), **characterised in that** the smaller angle measures between 0° and 5° and the larger angle measures between 45° and 15°.

15. Shaft-hub combination according to claim 14, **characterised in that** the smaller angle measures between 0° and 2° and the larger angle measures between 25° and 35°.

16. Shaft-hub combination according to claim 15, **characterised in that** the smaller angle measures 0° and the larger angle measures 30°.

17. Shaft-hub combination according to one of claims 14 to 16, **characterised in that** the mutually opposing face sections of the external and internal teeth (16, 25a, 25b, 22a, 22b, 22c, 26a, 26b) are plane.

18. Shaft-hub combination according to one of claims 14 to 17, **characterised in that** the tooth head (32, 37) of the external and/or internal teeth (16, 25a, 25b, 22a, 22b, 22c, 26a, 26b) is substantially plane.

19. Shaft-hub combination according to one of claims 14 to 18, **characterised in that** on the tooth head (32, 37) of the internal teeth (22a, 22b, 22c, 26a, 26b) and/or of the external teeth (16, 25a, 25b) a recess (38) is provided which is so shaped and/or positioned that a tooth web (39) remains on the, if necessary, respectively load-bearing tooth face (29, 34).

20. Shaft-hub combination according to claim 19, **characterised in that** the recess (38) extends from the tooth face (30, 35) standing at the larger angle substantially in a plane manner in the direction of the other tooth face (29, 34).

21. Shaft-hub combination according to one of claims 14 to 20, **characterised in that** the tooth base (31, 36) of the external and internal teeth (16, 25a, 25b, 22a, 22b, 22c, 26a, 26b) is filleted.

22. Shaft-hub combination according to claim 21, **characterised in that** the radius (r) in the tooth base (31) of the external teeth (16, 25a, 25b) measures between 0.35 m and 0.45 m, in particular 0.4 m and the radius (r) in the tooth base (36) of the internal teeth (22a, 22b, 22c, 26a, 26b) measures between 0.3 m and 0.4 m, in particular 0.35 m.

23. Shaft-hub combination according to one of claims 14 to 22, **characterised in that** the modulus of the internal and external teeth (16, 25a, 25b, 22a, 22b, 22c, 26a, 26b) is so selected that at least the teeth (28) of the external set of teeth (16, 25a, 25b) is resilient at least in the head region (32) of the teeth.

24. Shaft-hub combination according to one of claims 14 to 23, **characterised in that** the shaft (12, 24a, 24b) consists at least in the region of the external teeth (16, 25a, 25b) of a meltable material, whilst the hub (16a, 16b, 16c, 27a, 27b) is harder in comparison at least in the region of the internal teeth (22a, 22b, 22c, 26a, 26b).

## Revendications

1. Vis d'extrusion formée par un arbre et plusieurs éléments pouvant être enfichés ou étant enfichés de manière amovible sur celui-ci, l'arbre de la vis comportant une denture extérieure et les éléments de la vis comportant une denture intérieure engrenant dans cette dernière, les dents (28, 33) de la denture extérieure et intérieure (16, 25a, 25b, 22a, 22b, 22c, 26a, 26b) ayant un profil asymétrique, sachant que, par rapport à une direction de rotation préférentielle (R) de la vis d'extrusion (12, 23a, 23b), les flancs (29, 34), transmettant le couple de rotation, des dents (28, 33) de la denture extérieure et intérieure (16, 25a, 25b, 22a, 22b, 22c, 26a, 26b) sont disposés par rapport à la normale (N) sur l'axe de rotation (A) en formant un angle plus petit que celui formé par les flancs (30, 35) opposés sur chacune des dents (28, 33) de la denture extérieure et intérieure (16, 25a, 25b, 22a, 22b, 22c, 26a, 26b), **caractérisée en ce que** le plus petit angle mesure entre 0° et 5° et le plus grand angle mesure entre 45° et 15°.

2. Vis d'extrusion selon la revendication 1, **caractérisée en ce que** le plus petit angle mesure entre 0° et 2° et le plus grand angle mesure entre 25 et 35°.

3. Vis d'extrusion selon la revendication 2, **caractérisée en ce que** le plus petit angle mesure 0° et le plus grand angle mesure 30°.

4. Vis d'extrusion selon l'une quelconque des revendications précédentes, **caractérisée en ce que** les parties face à face des flancs de la denture extérieure et intérieure (16, 25a, 25b, 22a, 22b, 22c, 26a, 26b) sont réalisées avec une surface plane.

5. Vis d'extrusion selon l'une quelconque des revendications précédentes, **caractérisée en ce que** le sommet (32, 37) des dents de la denture extérieure et/ou intérieure (16, 25a, 25b, 22a, 22b, 22c, 26a, 26b) est réalisé sensiblement avec une surface plane.

6. Vis d'extrusion selon l'une quelconque des revendications précédentes, **caractérisée en ce que** sur le sommet (32, 37) des dents de la denture intérieure (22a, 22b, 22c, 26a, 26b) et/ou de la denture extérieure (16, 25a, 25b) est prévu un évidement (38) formé et/ou positionné de telle sorte qu'un rebord de dent (39) subsiste sur le flanc de dent (29, 34) respectif supportant éventuellement la charge.

7. Vis d'extrusion selon la revendication 6, **caractérisée en ce que** l'évidement (38) s'étend, en partant du flanc de dent (30, 35) formant le plus grand angle, de manière sensiblement plane vers l'autre flanc de dent (29, 34).

8. Vis d'extrusion selon l'une quelconque des revendications précédentes, **caractérisée en ce que** le fond (31, 36) des dents de la denture extérieure et intérieure (16, 25a, 25b, 22a, 22b, 22c, 26a, 26b) est arrondi.

9. Vis d'extrusion selon la revendication 8, **caractérisée en ce que** le rayon (r) dans le fond (31) des dents de la denture extérieure (16, 25a, 25b) mesure entre 0,35 m à 0,45 m, en particulier 0,4 m et le rayon (r) dans le fond (36) des dents de la denture intérieure (22a, 22b, 22c, 26a, 26b) mesure entre 0,3 m et 0,4 m, en particulier 0,35 m.

10. Vis d'extrusion selon l'une quelconque des revendications précédentes, **caractérisée en ce que** le module de la denture extérieure et intérieure (16, 25a, 25b, 22a, 22b, 22c, 26a, 26b) est choisi de telle sorte qu'au moins les dents (28) de la denture extérieure (16, 25a, 25b) sont flexibles au moins dans la zone du sommet (32) des dents.

11. Vis d'extrusion selon l'une quelconque des revendications précédentes, **caractérisée en ce que** l'arbre (12, 24a, 24b) de la vis est réalisé au moins dans la zone de la denture extérieure (16, 25a, 25b) dans un matériau plastifiable, tandis que les éléments (16a, 16b, 16c, 27a, 27b) de la vis sont, en conséquence, plus durs au moins dans la zone de la denture intérieure (22a, 22b, 22c, 26a, 26b).

12. Extrudeuse comportant une ou plusieurs vis d'extrusion (11, 23a, 23b) selon une des revendications précédentes.

13. Extrudeuse selon la revendication 12, **caractérisée en ce que**, en cas d'utilisation de deux vis d'extrusion (11, 23a, 23b) ou plus, les vis d'extrusion (11, 23a, 23b) tournent dans le même sens ou dans le sens opposé.

14. Assemblage arbre-moyeu, dans lequel l'arbre comporte une denture extérieure et le moyeu comporte une denture intérieure engrenant dans cette dernière, les dents (28, 33) de la denture extérieure et intérieure (16, 25a, 25b, 22a, 22b, 22c, 26a, 26b) ayant un profil asymétrique, sachant que, par rapport à une direction de rotation préférentielle (R) de l'arbre (12, 24a, 24b), les flancs (29, 34), transmettant le couple de rotation, des dents (28, 33) de la denture extérieure et intérieure (16, 25a, 25b, 22a, 22b, 22c, 26a, 26b) sont disposés par rapport à la normale (N) sur l'axe de rotation (A) en formant un angle plus petit que celui formé par les flancs (30, 35) opposés sur chacune des dents (28, 33) de la denture extérieure et intérieure (16, 25a, 25b, 22a, 22b, 22c, 26a, 26b), **caractérisé en ce que** le plus petit angle mesure entre 0° et 5° et le plus grand angle mesure entre 45° et 15°.

15. Assemblage arbre-moyeu selon la revendication 14, **caractérisé en ce que** le plus petit angle mesure entre 0° et 2° et le plus grand angle mesure entre 25 et 35°.

16. Assemblage arbre-moyeu selon la revendication 15, **caractérisé en ce que** le plus petit angle mesure 0° et le plus grand angle mesure 30°.

17. Assemblage arbre-moyeu selon l'une quelconque des revendications 14 à 16, **caractérisé en ce que** les parties face à face des flancs de la denture extérieure et intérieure (16, 25a, 25b, 22a, 22b, 22c, 26a, 26b) sont réalisées avec une surface plane.

18. Assemblage arbre-moyeu selon l'une quelconque des revendications 14 à 17, **caractérisé en ce que** le sommet (32, 37) des dents de la denture extérieure et/ou intérieure (16, 25a, 25b, 22a, 22b, 22c, 26a, 26b) est réalisé sensiblement avec une surface plane.

19. Assemblage arbre-moyeu selon l'une quelconque des revendications 14 à 18, **caractérisé en ce que** sur le sommet (32, 37) des dents de la denture intérieure (22a, 22b, 22c, 26a, 26b) et/ou de la denture extérieure (16, 25a, 25b) est prévu un évidement (38) formé et/ou positionné de telle sorte qu'un rebord de dent (39) subsiste sur le flanc de dent (29, 34) respectif supportant éventuellement la charge.

20. Assemblage arbre-moyeu selon la revendication 19, **caractérisé en ce que** l'évidement (38) s'étend, en partant du flanc de dent (30, 35) formant le plus grand angle, de manière sensiblement plane vers l'autre flanc de dent (29, 34).

21. Assemblage arbre-moyeu selon l'une quelconque des revendications 14 à 20, **caractérisé en ce que** le fond (31, 36) des dents de la denture extérieure et intérieure (16, 25a, 25b, 22a, 22b, 22c, 26a, 26b) est arrondi.

22. Assemblage arbre-moyeu selon la revendication 21, **caractérisé en ce que** le rayon (r) dans le fond (31) des dents de la denture extérieure (16, 25a, 25b) mesure entre 0,35 m à 0,45 m, en particulier 0,4 m et le rayon (r) dans le fond (36) des dents de la denture intérieure (22a, 22b, 22c, 26a, 26b) mesure entre 0,3 m et 0,4 m, en particulier 0,35 m.

23. Assemblage arbre-moyeu selon l'une quelconque des revendications 14 à 22, **caractérisé en ce que** le module de la denture extérieure et intérieure (16, 25a, 25b, 22a, 22b, 22c, 26a, 26b) est choisi de telle sorte qu'au moins les dents (28) de la denture extérieure (16, 25a, 25b) sont flexibles au moins dans la zone du sommet (32) des dents.

24. Assemblage arbre-moyeu selon l'une quelconque des revendications 14 à 23, **caractérisé en ce que** l'arbre (12, 24a, 24b) est réalisé au moins dans la zone de la denture extérieure (16, 25a, 25b) dans un matériau plastifiable, tandis que le moyeu (16a, 16b, 16c, 27a, 27b) est, en conséquence, plus dur au moins dans la zone de la denture intérieure (22a, 22b, 22c, 26a, 26b).
